# FASCICULE DE BREVET EUROPEEN

(11) **EP 0 902 257 B1**
(45) Date de publication et mention de la délivrance du brevet: **16.07.2003**
(21) Numéro de dépôt: 98402204.6
(22) Date de dépôt: 08.09.1998
(51) Int. Cl.: G01D 5/347, G01P 3/44

(54) **Procédé de fabrication d'un codeur optique pour palier à roulement et palier à roulement correspondant**
Verfahren zur Fabrikation eines optischen Kodierers für ein Kugellager und zugehöriges Kugellager
Procedure for fabrication of an optical encoder device for a roller bearing and corresponding roller bearing

(30) Priorité: 11.09.1997 FR 9711316
(43) Date de publication de la demande: 17.03.1999
(73) Titulaire: SKF FRANCE, F-92142 Clamart Cédex (FR)
(72) Inventeur: Message, Olivier, 37000 Tours (FR); Landrieve, Franck, 37230 Fondettes (FR)
(74) Mandataire: Casalonga, Axel

(56) Documents cités:
- EP-A- 0 523 281
- GB-A- 1 086 539
- US-A- 4 547 665
- US-A- 5 223 709

## Description

La présente invention concerne le domaine des paliers à roulement munis d'un codeur apte à coopérer avec un capteur optique.

De tels paliers à roulements sont connus, par exemple par le document FR 2 301 014 (POLYMOTOR). Les codeurs optiques montés dans ce type de palier à roulement sont constitués de flasques emmanchés sur la bague tournante, la partie active du codeur étant constituée d'une succession de zones claires et de zones foncées qui défilent à rotation devant la tête de lecture du capteur et sont éclairées par un faisceau lumineux émis par une partie du capteur. Le faisceau réfléchi, alternativement, par les zones claires et les zones foncées est capté par la cellule optique photosensible du capteur qui génère un signal électrique dont la fréquence est représentative de la vitesse de rotation du codeur par rapport au capteur.

Les moyens utilisés actuellement pour la réalisation des zones claires et des zones sombres font appel à des procédés relativement coûteux à mettre en oeuvre. Ils utilisent en général des techniques consistant à transférer sur un support, un film ou un revêtement destiné à former, directement ou après un traitement chimique ou physique, les zones claires et les zones sombres alternées constituant la partie active du codeur optique.

Dans ce qui suivra on désignera par zones claires du codeur les zones à pouvoir réfléchissant élevé et par zones sombres les zones à pouvoir réfléchissant réduit.

L'invention a pour objet de résoudre ce problème et de proposer un palier à roulement muni d'un codeur et un procédé de fabrication fiable et bon marché.

Le palier à roulement, selon l'invention, comprend une bague extérieure et une bague intérieure entre lesquelles sont disposées des éléments roulants au contact des dites bagues, l'une des dites bagues pouvant tourner par rapport à l'autre. Le palier à roulement comprend un codeur optique solidaire de la bague tournante et permettant, en association avec un capteur optique disposé sur une partie fixe, de mesurer des paramètres de rotation de la bague tournante, le codeur optique comprenant une alternance de bandes à pouvoir réfléchissant élevé et de bandes à pouvoir réfléchissant réduit. Les bandes sont formées directement sur la surface de la bague tournante, les bandes à pouvoir réfléchissant réduit étant constituées par une altération localisée du pouvoir réfléchissant de la surface de la bague tournante, les bandes à pouvoir réfléchissant élevé étant constituées par la surface d'origine de la bague tournante n'ayant subi aucune altération de son pouvoir réfléchissant.

Dans un mode de réalisation de l'invention, les bandes à pouvoir réfléchissant réduit sont constituées par un marquage direct sur une surface de la bague tournante.

Dans un mode de réalisation de l'invention, la surface de la bague tournante du roulement comportant le codeur est une surface de révolution engendrée par une génératrice droite. Selon les variantes, cette surface peut être cylindrique extérieure, cylindrique intérieure, radiale ou encore tronconique.

Dans un autre mode de réalisation de l'invention, la surface de la bague tournante du roulement est une surface de révolution engendrée par une génératrice courbe.

Le procédé de fabrication, selon l'invention, est prévu pour un palier à roulement comprenant une bague extérieure et une bague intérieure entre lesquelles sont disposées des éléments roulants au contact des dites bagues, l'une des dites bagues pouvant tourner par rapport à l'autre. Le dit palier comprend un codeur optique solidaire de la bague tournante et permettant, en association avec un capteur optique disposé sur une partie fixe, de mesurer des paramètres de rotation de la bague tournante, le codeur optique comprenant une alternance de bandes à pouvoir réfléchissant élevé et de bandes à pouvoir réfléchissant réduit, chaque bande à pouvoir réfléchissant élevé étant délimitée dans le sens de rotation du codeur par deux bandes à pouvoir réfléchissant réduit. On altère le pouvoir réfléchissant de portions d'une surface de la bague tournante pour former les bandes à pouvoir réfléchissant réduit et on conserve intact le pouvoir réfléchissant d'autres portions de la surface de la bague tournante pour former les bandes à pouvoir réfléchissant élevé.

La partie active du codeur est ainsi réalisée de façon simple, sans nécessiter de pièce supplémentaire et le codeur est directement formé sur la bague.

Dans un mode de réalisation de l'invention, l'altération du pouvoir réfléchissant est obtenue sans apport de matière.

Dans un mode de réalisation de l'invention, l'altération du pouvoir réfléchissant est obtenue par marquage au moyen d'un faisceau laser. Ce type de marquage conviendra à de nombreuses applications, y compris des applications avec températures élevées.

Dans un mode de réalisation de l'invention, l'altération du pouvoir réfléchissant est obtenue avec apport de matière.

Dans un mode de réalisation de l'invention, l'altération du pouvoir réfléchissant est obtenue par impression avec dépôt d'encre. Le marquage à l'encre, bien adapté à des applications fonctionnant à des températures relativement basses, est particulièrement économique et pourra avantageusement être effectué par le procédé du marquage par jet d'encre.

Ce procédé présente de nombreux avantages: il est notamment facile à intégrer dans une chaîne de fabrication automatisée, le nombre de zones claires et de zones sombres ainsi que leurs pas étant facilement programmables sur une machine de marquage au laser ou à l'encre. La partie active du codeur fabriquée suivant l'invention présente en outre une très bonne tenue à la température et au vieillissement comparativement à des codeurs conventionnels utilisant une partie active rapportée. Les coûts de fabrication sont réduits. Le nombre de pièces utilisées est réduit. Les dimensions de l'entrefer entre codeur et capteur sont mieux maîtrisées d'où une amélioration de la précision des mesures.

Tout risque de mouvement relatif entre le codeur et la bague tournante est supprimé d'où une meilleure fiabilité. Le codeur est d'encombrement nul. On peut utiliser des roulements conventionnels sans modification de forme. On peut disposer le codeur dans ou sur des endroits où la fixation d'un codeur rapporté est difficile ou impossible du fait de la forme des bagues.

La présente invention sera mieux comprise et d'autres avantages apparaîtront à la description détaillée de quelques modes de réalisation pris à titre d'exemples nullement limitatifs et illustrés par les dessins annexés sur lesquels :
la figure 1 est une vue en coupe axiale d'un palier à roulement selon un premier mode de réalisation de l'invention;
la figure 2 est une demi-vue en coupe axiale d'un palier à roulement selon un deuxième mode de réalisation de l'invention;
la figure 3 est une vue de face en élévation du palier de la figure 2;
la figure 4 est une demi-vue en coupe axiale d'un palier à roulement selon un troisième mode de réalisation de l'invention; et
la figure 5 est une demi-vue en coupe axiale d'un palier à roulement selon un quatrième mode de réalisation de l'invention.

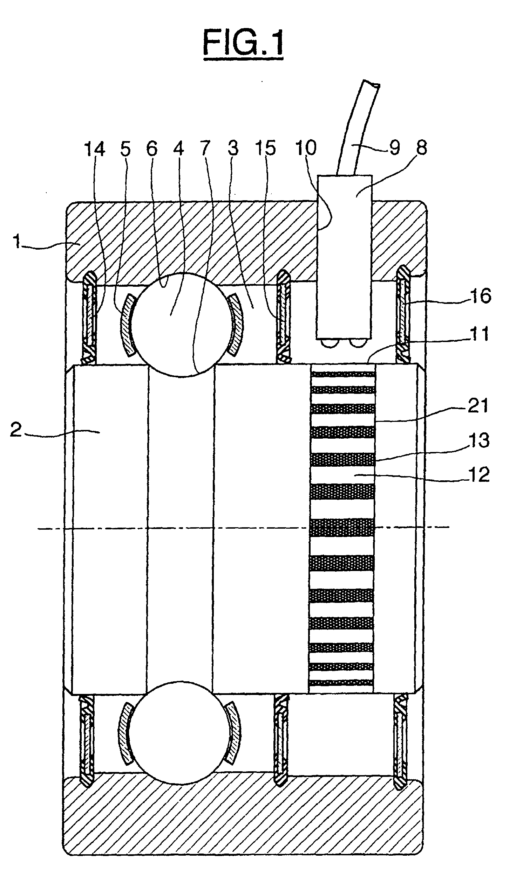

Comme on peut le voir sur la figure 1, le palier à roulement comprend une bague extérieure fixe 1, une bague intérieure tournante 2 définissant axialement et radialement entre elles un espace annulaire 3 dans lequel est disposée une rangée d'éléments roulants 4, par exemple des billes, maintenus par une cage 5. Les éléments roulants 4 sont en contact avec un chemin de roulement 6 de la bague extérieure 1 et un chemin de roulement 7 de la bague intérieure 2.

Dans l'espace annulaire 3 est également disposé un capteur optique 8, par exemple du type comprenant une source lumineuse et une cellule photosensible. Le capteur optique 8 est relié par un câble électrique 9 à des moyens de traitement du signal, non représentés. Le capteur optique 8 est fixé à la bague extérieure 1 dans un perçage radial 10 de cette dernière. Le capteur optique 8 s'étend radialement en direction d'une portée cylindrique 11 de la bague intérieure 2.

Pour une meilleure compréhension, la bague interne 2 est représentée sans coupe en vue de côté. Une alternance de zones claires 12 et de zones sombres 13 de formes rectangulaires et de dimensions égales sont prévues sur toute la circonférence de la portée cylindrique 11. Les zones claires 12 sont formées par la surface métallique brillante de la portée cylindrique 11 de la bague intérieure 2. Les zones sombres 13 sont réalisées par marquage direct au moyen d'un faisceau laser de la surface métallique de la portée cylindrique 11 de la bague intérieure 2. Les zones claires 12 et les zones sombres 13 forment ainsi la partie active de codeur 21, les zones claires 12 réfléchissant le faisceau lumineux incident émis par la source lumineuse du capteur 8, et les zones sombres 13 absorbant ou réfléchissant très peu ce faisceau lumineux incident.

Le palier à roulement est également pourvu d'organes d'étanchéité 14 à 16. Les organes d'étanchéité 14 et 15 sont disposés de chaque côté de la rangée d'éléments roulants 4, l'organe d'étanchéité 15 étant disposé entre les éléments roulants 4 et le capteur optique 8. L'organe d'étanchéité 16 est disposé à proximité du capteur 8 du côté opposé à l'organe d'étanchéité 15. On évite ainsi l'intrusion de corps étrangers à proximité des éléments roulants 4 et à proximité du capteur optique 8 et du codeur 21 formé par les zones claires 12 et les zones sombres 13.

En fonctionnement, le codeur optique 8 voit défiler une succession de zones claires 12 et de zones sombres 13 provoquant ainsi des variations du signal électrique généré par la cellule photosensible du capteur optique 8.

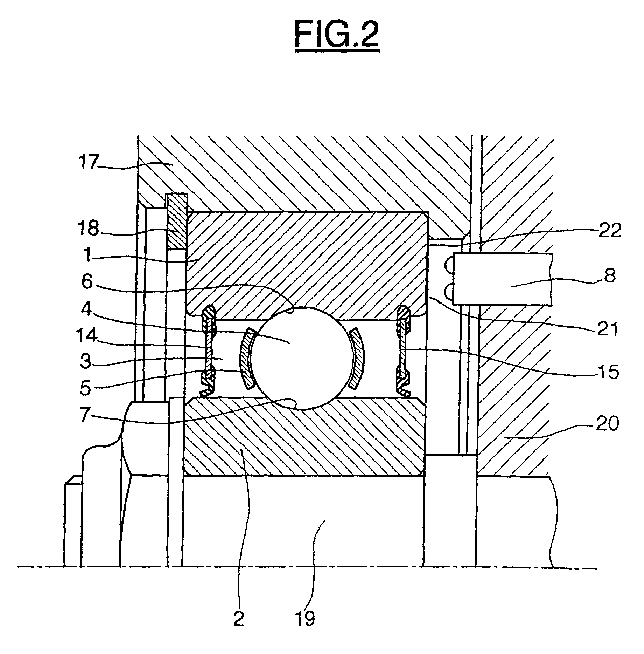

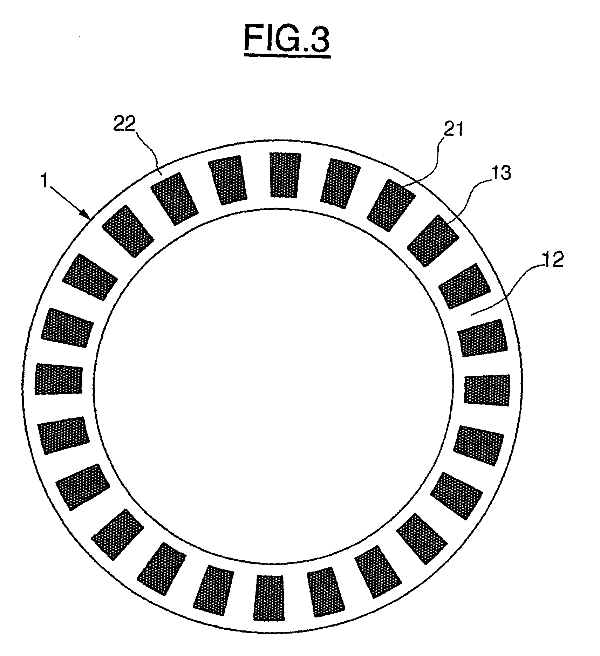

Comme on peut le voir sur les figures 2 et 3, la bague extérieure 1 du palier à roulement est montée sur un organe de support 17 et retenue axialement par un circlips 18. La bague intérieure 2 est montée sur un moyeu fixe 19. Le codeur optique 8 est solidaire d'un organe annexe 20 non tournant. Un codeur 21 est formé sur une surface radiale d'extrémité 22 de la bague extérieure tournante 1, le capteur optique 8 étant disposé en regard du codeur 21 avec un entrefer axial. Comme précédemment, le codeur 21 comprend une alternance de zones claires et de zones sombres, non visibles sur la figure, et obtenues directement par marquage de la surface radiale 22.

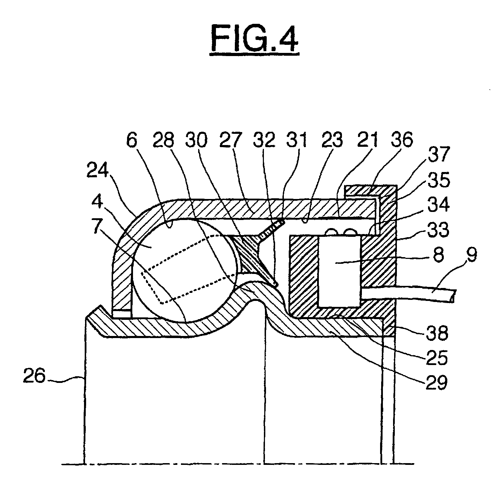

Le mode de réalisation illustré sur la figure 4 est similaire à celui de la figure 1 à ceci près que le codeur 21 est disposé sur un alésage 23 de la bague extérieure 24 et que le capteur optique 8 est disposé sur une surface cylindrique extérieure 25 de la bague intérieure 26. Les bagues extérieure 24 et intérieure 26 sont réalisées en tôle emboutie. La bague extérieure 24 comprend une portion cylindrique 27 s'étendant d'un côté des éléments roulants 4 à partir du chemin de roulement 6 et formant l'alésage 23 sur lequel est formé le codeur 21.

La bague intérieure 26 comprend une portion 28 bombée vers l'extérieur adjacente au chemin de roulement 7 et une portion cylindrique 29 s'étendant à partir de la portion bombée 28 à l'opposé des éléments roulants 4. La cage 30 de maintien des éléments roulants 4 est réalisée en matériau synthétique et comprend deux lèvres d'étanchéité, dont l'une référencée 31 est en contact avec l'alésage 23 et dont l'autre référencée 32 est en contact avec la portion bombée 28.

Un bloc-porte-capteur 33 est monté sur la portion cylindrique 29 et s'étend dans l'espace radial entre la dite portion cylindrique 29 et l'alésage 23. Sa fixation est assurée par collage ou emmanchement par exemple. Le capteur optique 8 affleure une surface extérieure 34 du dit bloc-porte-capteur 33 et est maintenu par le dit bloc-porte-capteur 33 à proximité du codeur 21. Le bloc-porte-capteur 33 comprend une portion circulaire radiale 35 s'étendant vers l'extérieur au delà de l'extrémité frontale de la portion cylindrique 27 et qui se prolonge par un rebord axial cylindrique 36 dirigé vers les éléments roulants 4 en entourant la dite extrémité frontale de la portion cylindrique 27 pour assurer une étanchéité par passage étroit 37 entre le bloc-porte-capteur 33 et la bague extérieure 24.

Le positionnement axial du bloc-porte-capteur 33 sur la bague intérieure 26 est assuré par contact entre l'extrémité frontale de la portion cylindrique 29 et un rebord 38 du bloc-porte-capteur 33. Le rebord 38 est radial et dirigé vers l'intérieur et peut être continu ou discontinu. A titre de variante, le positionnement axial du bloc-porte-capteur 33 pourrait être assuré par contact avec la portion bombée 28.

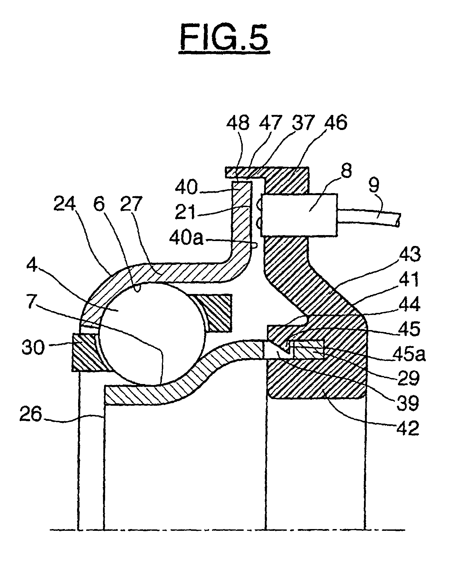

Le mode de réalisation illustré sur la figure 5 est semblable à celui illustré sur la figure 4 à ceci près que la bague intérieure 26 comprend une portion axiale 29 de diamètre supérieur à celui du chemin de roulement 7 et adjacent à celui-ci. La portion axiale 29 est pourvue d'au moins un trou débouchant 39. La bague extérieure 24 comprend une portion axiale 27 du même côté que la portion axiale 29 de la bague intérieure 26, et une portion radiale 40 disposée à l'extrémité libre de la portion axiale 27 et s'étendant vers l'extérieur. Le codeur 21 est formé sur la surface 40a de la portion radiale 40 opposée à la portion axiale 27.

Le bloc-porte-capteur 41 comprend une portion axiale 42 disposée sur l'alésage de la portion axiale 29 de la bague intérieure 26 et obturant le trou traversant 39. L'alésage de la partie axiale 42 est de diamètre supérieur ou égal à celui de la bague intérieure 26. La portion axiale 42 est reliée à une portion oblique 43 qui s'étend radialement vers l'extérieur et axialement en direction de la partie radiale 40 de la bague extérieure 24.

A partir de la portion oblique 43, au moins une languette 44 s'étend axialement en direction des éléments roulants 4. La languette 44 est en contact avec la surface extérieure cylindrique de la partie axiale 29 de la bague intérieure 26 d'où il résulte la fixation radiale du bloc-porte-capteur 41 par rapport à la bague intérieure 26. La languette 44 comprend une protubérance 45 qui s'étend dans le trou traversant 39 et qui forme un moyen d'encliquetage empêchant, après montage, toute séparation axiale du bloc-porte-capteur 41 et de la bague intérieure 26. A cet effet, la protubérance 45 est pourvue d'une surface radiale 45a apte à coopérer avec un bord correspondant du trou traversant 39. Le bloc-porte-capteur 41 peut donc se monter sur la bague intérieure 26 par un simple mouvement axial provoquant la flexion de la languette 44 en raison du frottement de la protubérance 45 sur la surface extérieure de la portion axiale 29, puis la mise en place de ladite protubérance 45 dans le trou 39.

Le bloc-porte-capteur 41 se complète par une portion radiale 46 s'étendant en regard et à faible distance de la partie radiale 40 de la bague extérieure 24. La partie radiale 46 supporte le capteur 8 disposé radialement au niveau du codeur 21 et axialement en regard et à table distance de ce dernier. La partie radiale 46 se prolonge par un rebord axial 47 entourant l'extrémité libre 48 de la partie radiale 40 de la bague extérieure 24 et formant avec ladite extrémité libre 48 un passage étroit 37.

Dans les exemples qui précèdent, le marquage est effectué sur une surface de révolution de la bague tournante, telle qu'une surface cylindrique par exemple, engendrée par une génératrice droite. On pourrait tout aussi bien envisager d'effectuer le marquage sur une surface de révolution engendrée par une génératrice courbe.

On voit donc que dans tous les cas, le codeur est réalisé par marquage sur une pièce dont la présence est nécessaire pour d'autres raisons. Ainsi, grâce à l'invention, la formation des zones claires et des zones sombres du codeur optique ne nécessite aucune pièce supplémentaire, ce qui entraîne une diminution de l'encombrement et des coûts de fabrication. De plus, on n'a pas besoin d'outillage spécifique de marquage tributaire du diamètre de la partie active du codeur et du nombre de zones claires et sombres à former.

Enfin, ce type de marquage est facilement industrialisable, se prête parfaitement à une intégration en chaîne et peut être effectué sur des surfaces de forme très variées.

## Revendications

1. Palier à roulement comprenant une bague extérieure (1) et une bague intérieure (2) entre lesquelles sont disposées des éléments roulants (4) au contact des dites bagues (1,2), l'une des dites bagues pouvant tourner par rapport à l'autre, le dit palier comprenant un codeur optique (21) solidaire de la bague tournante et permettant, en association avec un capteur optique (8) disposé sur une partie fixe, de mesurer des paramètres de rotation de la bague tournante, le codeur optique (21) comprenant une alternance de bandes (13) à pouvoir réfléchissant élevé et de bandes (12) à pouvoir réfléchissant réduit, chaque bande (13) à pouvoir réfléchissant élevé étant délimitée dans le sens de rotation du codeur (21) par deux bandes (12) à pouvoir réfléchissant réduit, **caractérisé par le fait que** les dites bandes (12,13) sont formées directement sur la surface de la bague tournante du roulement, les bandes (12) à pouvoir réfléchissant réduit étant constituées par une altération localisée du pouvoir réfléchissant de la surface de la bague tournante, les bandes (13) à pouvoir réfléchissant élevé étant constituées par la surface d'origine de la bague tournante n'ayant subi aucune altération de son pouvoir réfléchissant.

2. Palier selon la revendication 1, **caractérisé par le fait que** les bandes (12) à pouvoir réfléchissant réduit sont constituées par un marquage direct sur une surface de la bague tournante.

3. Palier selon la revendication 1 ou 2, **caractérisé par le fait que** la surface de la bague tournante du roulement comportant le codeur (21) est une surface de révolution engendrée par une génératrice droite.

4. Palier selon la revendication 3, **caractérisé par le fait que** la surface de la bague tournante du roulement est cylindrique extérieure ou intérieure.

5. Palier selon la revendication 3, **caractérisé par le fait que** la surface de la bague tournante du roulement est radiale.

6. Palier selon la revendication 3, **caractérisé par le fait que** la surface de la bague tournante du roulement est tronconique.

7. Palier selon la revendication 1 ou 2, **caractérisé par le fait que** la surface de la bague tournante du roulement comportant le codeur (21) est une surface de révolution engendrée par une génératrice courbe.

8. Procédé de fabrication d'un palier à roulement comprenant une bague extérieure (1) et une bague intérieure (2) entre lesquelles sont disposées des éléments roulants (4) au contact des dites bagues (1,2), l'une des dites bagues pouvant tourner par rapport à l'autre, le dit palier comprenant un codeur optique (21) solidaire de la bague tournante et permettant, en association avec un capteur optique (8) disposé sur une partie fixe, de mesurer des paramètres rotation de la bague tournante, le codeur optique (21) comprenant une alternance de bandes (13) à pouvoir réfléchissant élevé et de bandes (12) à pouvoir réfléchissant réduit, chaque bande (13) à pouvoir réfléchissant élevé étant délimitée dans le sens de rotation du codeur (21) par deux bandes (12) à pouvoir réfléchissant réduit, dans lequel on altère le pouvoir réfléchissant de portions d'une surface de la bague tournante pour former les bandes (12) à pouvoir réfléchissant réduit et on conserve intact le pouvoir réfléchissant d'autres portions de la surface de la bague tournante pour former les bandes (13) à pouvoir réfléchissant élevé.

9. Procédé selon la revendication 8, dans lequel l'altération du pouvoir réfléchissant est obtenue sans apport de matière.

10. Procédé selon la revendication 9, dans lequel l'altération du pouvoir réfléchissant est obtenue par marquage au moyen d'un faisceau laser.

11. Procédé selon la revendication 8, dans lequel l'altération du pouvoir réfléchissant est obtenue avec apport de matière.

12. Procédé selon la revendication 11, dans lequel l'altération du pouvoir réfléchissant est obtenue par impression avec dépôt d'encre.

13. Procédé selon la revendication 12, dans lequel l'altération du pouvoir réfléchissant est obtenue par jet d'encre.

## Patentansprüche

1. Wälzlager mit einem Außenring (1) und einem Innenring (2), zwischen denen Wälzkörper (4) angeordnet sind, die mit den Ringen (1,2) in Berührung stehen, wobei der eine der Ringe in der Lage ist, gegenüber dem anderen zu rotieren, wobei das Wälzlager einen an dem umlaufenden Ring befestigten optischen Impulsgeber (21) umfasst, der es ermöglicht, im Zusammenwirken mit einem an einem feststehenden Teil angebrachten optischen Aufnehmer (8) Rotationsparameter des umlaufenden Rings zu erfassen, wobei der optische Impulsgeber (21) eine Wechselfolge von Streifen (13) mit einem höheren Reflexionsvermögen und Streifen (12) mit einem verringerten Reflexionsvermögen aufweist und jeder Streifen (13) mit einem erhöhten Reflexionsvermögen in der Drehrichtung des Impulsgebers (21) durch zwei Streifen (12) mit einem verringerten Reflexionsvermögen begrenzt ist, **dadurch gekennzeichnet, dass** die Streifen (12,13) unmittelbar auf der Oberfläche des umlaufenden Rings des Wälzlagers ausgebildet sind, wobei die Streifen (12) mit einem verringerten Reflexionsvermögen durch eine örtlich begrenzte Veränderung des Reflexionsvermögens der Oberfläche des umlaufenden Rings gebildet sind, während die Streifen (13) mit einem erhöhten Reflexionsvermögen durch die ursprüngliche Oberfläche des umlaufenden Rings gebildet sind, die keine Veränderung ihres Reflexionsvermögens erfahren hat.

2. Wälzlager nach Anspruch 1, **dadurch gekennzeichnet, dass** die Streifen (12) mit einem verringerten Reflexionsvermögen durch eine unmittelbare Markierung auf der Oberfläche des umlaufenden Rings gebildet sind.

3. Wälzlager nach Anspruch 1 oder 2, **dadurch gekennzeichnet, dass** die Oberfläche des umlaufenden Rings des Wälzlagers, die den Impuisgeber (21) aufweist, eine Rotationsfläche ist, deren Erzeugende eine Gerade ist.

4. Wälzlager nach Anspruch 3, **dadurch gekennzeichnet, dass** die Oberfläche des umlaufenden Rings des Wälzlagers eine zylindrische Außen- oder Innenfläche ist.

5. Wälzlager nach Anspruch 3, **dadurch gekennzeichnet, dass** die Oberfläche des umlaufenden Rings des Wälzlagers eine Radialfläche ist.

6. Wälzlager nach Anspruch 3, **dadurch gekennzeichnet, dass** die Oberfläche des umlaufenden Rings des Wälzlagers konisch ist.

7. Wälzlager nach Anspruch 1 oder 2, **dadurch gekennzeichnet, dass** die Oberfläche des umlaufenden Rings des Wälzlagers, die den Impulsgeber (21) aufweist, eine Rotationsfläche ist, deren Erzeugende eine Kurve ist.

8. Verfahren zur Herstellung eines Wälzlagers mit einem Außenring (1) und einem Innenring (2), zwischen denen Wälzkörper (4) angeordnet sind, die mit den Ringen (1,2) in Berührung stehen, wobei der eine der Ringe in der Lage ist, gegenüber dem anderen zu rotieren, wobei das Wälzlager einen an dem umlaufenden Ring befestigten optischen Impulsgeber (21) umfasst, der es ermöglicht, im Zusammenwirken mit einem an einem feststehenden Teil angebrachten optischen Aufnehmer (8) Rotationsparameter des umlaufenden Rings zu erfassen, wobei der optische Impulsgeber (21) eine Aufeinanderfolge von Streifen (13) mit einem höheren Reflexionsvermögen und Streifen (12) mit einem verringerten Reflexionsvermögen aufweist und jeder Streifen (13) mit einem erhöhten Reflexionsvermögen in der Drehrichtung des Impulsgebers (21) durch zwei Streifen (12) mit einem verringerten Reflexionsvermögen begrenzt ist, bei dem das Reflexionsvermögen von Abschnitten einer Oberfläche des umlaufenden Rings geeignet verändert wird, um die Streifen mit einem verringerten Reflexionsvermögen zu bilden, und das Reflexionsvermögen der übrigen Abschnitte der Oberfläche des umlaufenden Rings unverändert belassen wird, so dass diese Abschnitte die Streifen (13) mit einem höheren Reflexionsvermögen darstellen.

9. Verfahren nach Anspruch 8, bei dem die Veränderung des Reflexionsvermögens ohne Hinzufügen von Werkstoff erreicht wird.

10. Verfahren nach Anspruch 9, bei dem die Veränderung des Reflexionsvermögens durch Markieren mittels eines Laserstrahls erreicht wird.

11. Verfahren nach Anspruch 8, bei dem die Veränderung des Reflexionsvermögens mit Hinzufügen von Werkstoff erreicht wird.

12. Verfahren nach Anspruch 11, bei dem die Veränderung des Reflexionsvermögens drucktechnisch mittels Farbenauftrags erreicht wird.

13. Verfahren nach Anspruch 12, bei dem die Veränderung des Reflexionsvermögens mittels Tintenstrahltechnik erreicht wird.

## Claims

1. Rolling bearing comprising an outer ring (1) and an inner ring (2) between which rolling elements (4) are arranged in contact with the said rings (1, 2), one of the said rings being able to rotate with respect to the other, the said bearing comprising an optical encoder (21) secured to the rotating ring and, in combination with an optical sensor (8) arranged on a fixed part, making it possible to measure rotation parameters of the rotating ring, the optical encoder (21) comprising an alternation of bands (13) of high reflectivity and bands (12) of low reflectivity, each band (13) of high reflectivity being delimited in the direction of rotation of the encoder (21) by two bands (12) of low reflectivity, **characterized in that** the said bands (12, 13) are formed directly on the surface of the rotating ring of the rolling bearing, the bands (12) of low reflectivity consisting of a localized deterioration of the reflectivity of the surface of the rotating ring, the bands (13) of high reflectivity consisting of the original surface of the rotating ring which has not had its reflectivity deteriorated in any way.

2. Bearing according to claim 1, **characterized in that** the bands (12) of low reflectivity consist of direct marking on a surface of the rotating ring.

3. Bearing according to claim 1 or 2, **characterized in that** the surface of the rotating ring of the bearing comprising the encoder (21) is a surface of revolution generated by a straight generatrix.

4. Bearing according to claim 3, **characterized in that** the surface of the rotating ring of the rolling bearing is externally or internally cylindrical.

5. Bearing according to claim 3, **characterized in that** the surface of the rotating ring of the rolling bearing is radial.

6. Bearing according to claim 3, **characterized in that** the surface of the rotating ring of the rolling bearing is frustoconical.

7. Bearing according to claim 1 or 2, **characterized in that** the surface of the rotating ring of the rolling bearing comprising the encoder (21) is a surface of revolution generated by a curved generatrix.

8. Method of manufacturing a rolling bearing comprising an outer ring (1) and an inner ring (2) between which rolling elements (4) are arranged in contact with the said rings (1, 2), one of the said rings being able to rotate with respect to the other, the said bearing comprising an optical encoder (21) secured to the rotating ring and, in combination with an optical sensor (8) arranged on a fixed part, making it possible to measure rotation parameters of the rotating ring, the optical encoder (21) comprising an alternation of bands (13) of high reflectivity and bands (12) of low reflectivity, each band (13) of high reflectivity being delimited in the direction of rotation of the encoder (21) by two bands (12) of low reflectivity, in which the reflectivity of portions of one surface of the rotating ring is deteriorated in order to form the bands (12) of low reflectivity, and the reflectivity of other portions of the surface of the rotating ring is left intact to form the bands (13) of high reflectivity.

9. Method according to claim 8, in which the reflectivity is deteriorated without the addition of material.

10. Method according to claim 9, in which the reflectivity is deteriorated by marking using a laser beam.

11. Method according to claim 8, in which the reflectivity is deteriorated with the addition of material.

12. Method according to claim 11, in which the reflectivity is deteriorated by printing with the deposition of ink.

13. Method according to claim 12, in which the reflectivity is deteriorated by inkjet.
